# EUROPÄISCHE PATENTSCHRIFT

(11) **EP 1 304 152 B1**
(45) Veröffentlichungstag und Bekanntmachung des Hinweises auf die Patenterteilung: **09.08.2006**
(21) Anmeldenummer: 02023400.1
(22) Anmeldetag: 18.10.2002
(51) Int. Cl.: B01D 46/12, F01N 3/022

(54) **Abgasanlage mit Partikelfilter für einen Verbrennungsmotor**
Exhaust system with particle filter for an internal combustion engine
Système d'échappement avec filtre à particules pour moteur à combustion interne

(30) Priorität: 19.10.2001 DE 10151698
(43) Veröffentlichungstag der Anmeldung: 23.04.2003
(73) Patentinhaber: J. Eberspächer GmbH & Co. KG, 73730 Esslingen (DE)
(72) Erfinder: Többen, Heike, Dr., 73033 Göppingen (DE); Hauber, Thomas, Dr., 73776 Altbach (DE)
(74) Vertreter: Klunker . Schmitt-Nilson . Hirsch

(56) Entgegenhaltungen:
- EP-A- 0 687 805
- EP-A- 1 055 805
- US-A- 4 346 557
- US-A- 4 625 511
- US-A- 4 857 088
- PATENT ABSTRACTS OF JAPAN vol. 007, no. 193 (M-238), 24. August 1983 (1983-08-24) & JP 58 093915 A (NIPPON JIDOSHA BUHIN SOGO KENKYUSHO KK), 3. Juni 1983 (1983-06-03)

## Beschreibung

Gegenstand der Erfindung ist eine Abgasanlage für einen Verbrennungsmotor, die mindestens zwei seriell angeordnete Partikelfilter und eine Strömungsumgehung aufweist, durch die ein Teilstrom des Abgases, unter Vermeidung der Filtration in dem mehr stromauf befindlichen, ersten Partikelfilter geführt und hinter dem ersten Partikelfilter wieder mit dem restlichen Teilstrom des Abgases nach dessen Filterung in den ersten Partikelfilter vereinigt wird, wobei der mehr stromab befindliche, zweite Partikelfilter zur Filtration des vereinigten Gesamtstroms des Abgases vorgesehen ist, dadurch gekennzeichnet, dass die Relation der Filterwirkungsgrade der zwei Partikelfilter und/oder die Relation der Filterflächen der zwei Partikelfilter und/oder der Strömungswiderstand der Strömungsumgehung derart gewählt sind, dass sich im Betrieb bei beiden Partikelfiltern eine ähnliche Schichtdicke abgeschiedener Partikel ergibt.

Eine Abgasanlage, welche die im vorangehenden Absatz vor den Worten "dadurch gekennzeichnet" angegebenen Merkmale aufweist, ist aus US 4 625 511 A bekannt. Bei der bekannten Abgasanlage haben die zwei Partikelfilter gleiche Größe, gleichen Aufbau und gleichen Filterwirkungsgrad. Infolgedessen herrschen im zweiten Partikelfilter andere Partikelabscheidungsverhältnisse als im ersten Partikelfilter, weil dem zweiten Partikelfilter der gesamte Abgasstrom mit wesentlich verringerter Partikelbeladung zuströmt, wohingegen der erste Partikelfilter von einem kleineren Abgasstrom mit voller Partikelbeladung durchströmt wird.

Vorzugsweise bedeutet "ähnliche Schichtdicke" einen Schichtdickenunterschied unter 30 %. Es ergibt sich, dass die mit der zunehmenden Abscheidung von Partikeln bzw. der zunehmenden Schichtdicke abgeschiedener Partikel an der Filterfläche einhergehende Erhöhung des Durchströmungswiderstands bei dem ersten Partikelfilter und bei dem zweiten Partikelfilter im Wesentlichen gleich stattfindet, so dass bei beiden Partikelfiltern die Notwendigkeit der Regeneration in etwa zur gleichen Zeit eintritt. Dies ist wesentlich günstiger als wenn einer der beiden Partikelfilter mit dem Anwachsen der Schichtdicke abgeschiedener Partikel im Betrieb deutlich vorangeht und dadurch den Gegendruck der Abgasanlage und den Zeitpunkt für die erforderliche Regeneration dominiert.

Man kann die Abgasanlage so ausführen, dass die Filterwirkungsgrade der beiden Partikelfilter unterschiedlich sind. In den häufigsten praktischen Fällen wird jedoch mit zwei Partikelfiltern mit im Wesentlichen gleichem Filterwirkungsgrad bzw. mit im Wesentlichen gleicher Porosität bzw. im Wesentlichen gleicher Porengröße gearbeitet.

Es ist ganz besonders bevorzugt, die beiden Partikelfilter mit im Wesentlichen gleichem Filterwirkungsgrad auszuführen, die Filterfläche ("Filtrations-Zuströmoberfläche") des zweiten Partikelfilters im Wesentlichen gleich der Filterfläche des ersten Partikelfilters zu wählen (oder wegen eines weiter unten genannten Gesichtspunkts größer zu wählen), und vorzugsweise den Strömungswiderstand der Strömungsumgehung so zu wählen, dass sich der zuströmende Abgasstrom im Wesentlichen gleichmäßig auf einen ersten Teilstrom zur Filtration in einem ersten Partikelfilter und einen zweiten Teilstrom durch die Strömungsumgehung aufteilt (oder der zweite Teilstrom in gewissem Ausmaß größer ist, siehe weiter unten).

Wenn man die erfindungsgemäe Abgasanlage mit einer konventionellen Abgasanlage mit nur einem Partikelfilter vergleicht, erhält man eine wesentlich größere Filtrations-Zuströmoberfläche (häufig einfach "Filterfläche" genannt), damit geringeren Druckverlust bzw. Strömungswiderstand, und außerdem - bezogen auf gleiche Schichtdicke abgeschiedener Partikel auf der Filterfläche - ein größeres Aufnahmevolumen für abgeschiedene Partikel, und damit - betrachtet bei gleichem Partikelanfall - längere Zeitintervalle zwischen den einzelnen Regenerationen. Gesehen in der generellen Längsrichtung der Abgasanlage, also jeweils auf die Stirnseite des betreffenden Partikelfilters, ist der für den betreffenden Partikelfilter benötigte Einbauraum nicht oder nur geringfügig größer als bei einer konventionellen Abgasanlage mit nur einem Partikelfilter. Für den zweiten Partikelfilter wird zwar weiterer Einbauraum benötigt, der jedoch hinter dem ersten Partikelfilter häufig problemloser zur Verfügung steht als z.B. durch Verdoppelung der stirnseitigen Flächengröße ein und desselben Partikelfilters. Außerdem lassen sich kürzere Partikelfilter einsetzen, was insbesondere bei den häufig eingesetzten monolithischen Keramikfiltern günstig ist, weil diese sich nur sehr schwer in größerer Länge und dennoch dauerfest herstellen lassen.

Die erfindungsgemäße Abgasanlage ist insbesondere für einen Dieselmotor vorgesehen. Die Abgase von Dieselmotoren enthalten bekanntlich Partikel, deren Menge allerdings je nach Konstruktion des Dieselmotors kleiner oder größer ist. Die erfindungsgemäße Abgasanlage kann jedoch auch bei einem Ottomotor eingesetzt werden, insbesondere einem Ottomotor mit direkt einspritzendem Brennverfahren. Die erfindungsgemäße Abgasanlage ist insbesondere vorgesehen für Verbrennungsmotoren in Kraftfahrzeugen (z.B. Lastkraftwagen, Omnibusse, Personenkraftwagen, Baumaschinen, Schiffe), lässt sich aber auch bei stationären Verbrennungsmotoren (z.B. Antriebe für Notstromaggregate, für Pumpen) einsetzen.

Vorzugsweise ist die Strömungsumgehung mit einem derartigen Strömungswiderstand vorgesehen, dass sich der Abgasstrom im Wesentlichen gleichmäßig auf einen ersten Teilstrom zur Filtration in dem ersten Partikelfilter und einen zweiten Teilstrom durch die Strömungsumgehung aufteilt. In diesem Fall ergibt sich - wenn der Filterwirkungsgrad der beiden Partikelfilter im Wesentlichen gleich ist - eine im Wesentlichen gleiche Gewichtsmenge abgeschiedener Partikel pro Zeiteinheit in den beiden Partikelfiltern. Es kann günstig und bevorzugt sein, die Filterfläche des zweiten Partikelfilters größer zu machen als die Filterfläche des ersten Partikelfilters, weil der Filtrationsstrom durch den zweiten Partikelfilter größer ist als der Filtrationsstrom durch den ersten Partikelfilter. Zusätzlich oder alternativ kann es günstig und bevorzugt sein, die Strömungsumgehung mit einem derartigen Strömungswiderstand vorzusehen, dass der zweite Teilstrom größer, vorzugsweise unter 30% größer, als der erste Teilstrom ist.

Vorzugsweise ist mindestens einer der zwei Partikelfilter ein monolithischer Keramikfilter, ein Keramikschaum-Filter oder ein Faserfilter. Bei dem monolithischen Keramikfilter herrscht die bekannte Bauart vor, dass er eine Vielzahl von sich parallel längs erstreckenden Kanälen besitzt, die - wenn man auf die Stirnseite des Keramikfilters blickt - abwechselnd am vorderen Ende und am hinteren Ende verschlossen sind, so dass das Abgas durch die porösen keramischen Wände von Kanal zu Nachbarkanal strömen muss; man beachte jedoch die weiter unten beschriebene Ausführung, bei der ein Teil der Längskanäle weder vorn noch hinten verschlossen ist. Faserfilter sind vorzugsweise mit Glasfasern oder Keramikfasern entsprechender Temperaturbeständigkeit aufgebaut.

Vorzugsweise weist die Strömungsumgehung mehrere strömungsmäßig parallel geschaltete Strömungskanäle auf, was anhand der weiter unten beschriebenen Ausführungsbeispiele noch anschaulicher ausgeführt wird.

Eine erste bevorzugte konkrete Möglichkeit zur Schaffung der Strömungsumgehung besteht darin, dass der erste Partikelfilter ein monolithischer Keramikfilter ist, bei dem ein Teil der Längskanäle für gänzliche Längsdurchströmung offen ist. Hiermit hat man gleichsam eine im Partikelfilter integrierte Strömungsumgehung vor sich.

Eine zweite bevorzugte konkrete Ausführungsmöglichkeit der Strömungsumgehung ist deren Anordnung in dem Ringraum zwischen dem ersten Partikelfilter und seinem Gehäuse. Besonders bevorzugt ist hierbei, in dem Ringraum umfangsmäßig verteilt mehrere Röhrchen anzuordnen, die sich längs des ersten Partikelfilters erstrecken. Die Röhrchen können vorzugsweise mittels Sicken gehaltert sein, die im Gehäuse des ersten Partikelfilters ausgebildet sind.

Eine dritte bevorzugte konkrete Möglichkeit zur Schaffung der Strömungsumgehung ist eine Bypass-Leitung, die an dem ersten Partikelfilter vorbei führt, vorzugsweise außerhalb des Gehäuses des ersten Partikelfilters.

Es wird betont, dass die beschriebenen bevorzugten konkreten Ausbildungsmöglichkeiten für die Strömungsumgehung in beliebiger Kombination zu zweit oder zu dritt miteinander kombiniert sein können.

Vorzugsweise sind beide Partikelfilter katalytisch beschichtet zur Senkung der Regenerationstemperatur, bei der abgeschiedene Partikel durch Verbrennung entfernbar sind. Das katalytische Beschichten von Partikelfiltern zur Senkung der Regenerationstemperatur und die dabei konkret eingesetzten Katalysatoren sind grundsätzlich bekannt. Alternativ ist es bevorzugt, dass nur der erste Partikelfilter katalytisch beschichtet ist zur Senkung der Regenerationstemperatur, bei der abgeschiedene Partikel durch Verbrennung entfernbar sind. Die Verbrennung von Partikeln in dem ersten Partikelfilter ist ein exothermer Vorgang, und bei der Regeneration ist die dadurch hinter dem ersten Partikelfilter erhöhte Abgastemperatur bei einem Teil der Auslegungen von Abgasanlagen ausreichend, eine Verbrennung von abgeschiedenen Partikeln in dem zweiten Partikelfilter ohne dortige katalytische Beschichtung zu ermöglichen.

Vorzugsweise ist die erfindungsgemäße Abgasanlage mit einem Brenner für einen fossilen Brennstoff ausgestattet, um das Abgas zur Regeneration aufzuheizen. Besonders günstig ist eine Positionierung des Brenners kurz stromauf von dem ersten Partikelfilter, insbesondere in dem Gehäuse des ersten Partikelfilters.

Die Erfindung und bevorzugte Ausgestaltungen der Erfindung werden nachfolgend anhand von schematisiert zeichnerisch dargestellten Ausführungsbeispielen noch näher erläutert. Es zeigt:
Fig. 1 einen Teil einer Abgasanlage in Seitenansicht; diese Abgesanlage ist nicht patentgemäß, weil sie eine Strömungsungehung des ersten Partikelfilters aufweist;
Fig. 2 als Ausführungsbeispiel der Erfindung einen ersten Partikelfilter einer Abgasanlage im Querschnitt und in größerem Maßstab;
Fig. 3 als weiteres Ausführungsbeispiel der Erfindung einen Teil einer Abgasanlage in Seitenansicht.

Von einer Abgasanlage 2 für den Verbrennungsmotor eines Kraftfahrzeugs ist nur derjenige Teil gezeichnet, der Partikelfilter enthält. Stromauf ist die Abgasanlage 2 an den Verbrennungsmotor angeschlossen, stromab liegt das Ende der Abgasanlage 2, wo das Abgas in die Umgebung ausströmt. Außer den Partikelfiltern enthält die Abgasanlage 2 typischerweise mehrere Schalldämpfer und einen oder mehrere Katalysatorkörper (d.h. durchströmbare, katalysatorbeschichtete Körper) zur chemischen Umwandlung von Abgasbestandteilen.

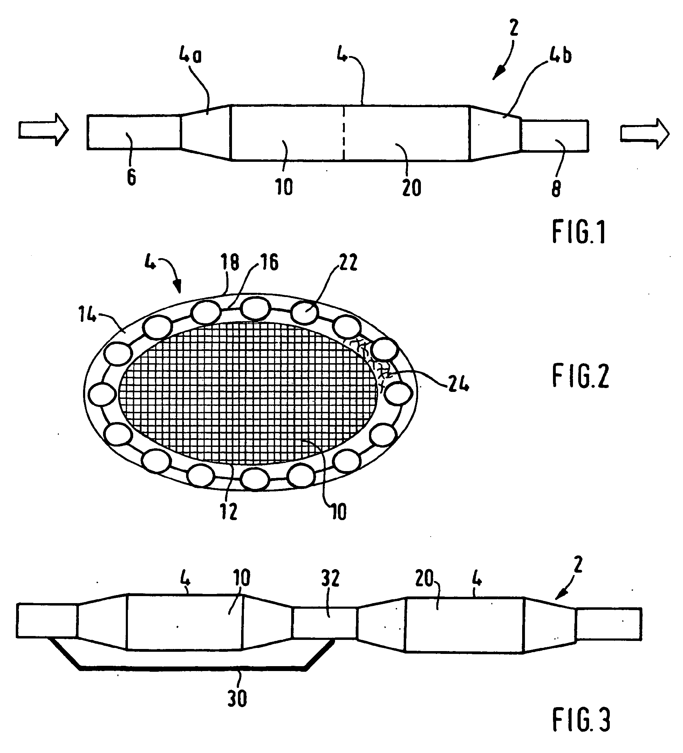

Der in Fig. 1 gezeichnete Teil der Abgasanlage enthält einen ersten Partikelfilter 10 und einen zweiten Partikelfilter 20, die strömungsmäßig seriell in einem gemeinsamen Gehäuse 4 angeordnet sind und somit hintereinander jeweils von dem gesamten Abgasstrom durchströmt werden. Typischerweise ist zwischen den zwei Partikelfiltern 10 und 20 ein Längsabstand von einigen cm vorhanden.

Das Gehäuse 4 geht stromauf von den Partikelfiltern 10 und 20 mit einem Übergangsabschnitt 4a in einen rohrförmigen, anschließenden Bereich 6 der Abgasanlage 2 über. Stromab von den Partikelfiltern 10 und 20 geht das Gehäuse 4 mit einem Übergangsabschnitt 4b in einen rohrförmigen anschließenden Bereich 8 der Abgasanlage 2 über. In Strömungsrichtung fortschreitend schafft der Übergangsabschnitt 4a eine Erweiterung des Strömungsquerschnitts für das Abgas und schafft der Übergangsabschnitt 4b eine Verkleinerung des Strömungsquerschnitts für das Abgas.

Es wird betont, dass es alternativ möglich ist, die zwei Partikelfilter 10 und 20 mit größerem Längsabstand und gleichsam in zwei gesonderten Gehäusen 4 anzuordnen, insoweit wie in Fig. 3 bei einer ansonsten anders aufgebauten Abgasanlage gezeichnet.

Der erste Partikelfilter 10 hat eine größere Porosität bzw. Porengröße und damit einen geringeren Filterwirkungsgrad als der zweite Partikelfilter 20. Der erste Partikelfilter 10 hält Partikel mit einer Größe oberhalb einer bestimmten Schwelle zurück, während Partikel mit einer Größe unterhalb dieser Schwelle durch den ersten Partikelfilter 10 hindurch gehen. Der zweite Partikelfilter 20 hält Partikel mit einer Größe unterhalb der genannten Schwelle zurück, wobei man es durch Auslegung des zweiten Partikelfilters 20 in der Hand hat, bis hinunter zu welcher Partikelgröße er Partikel zurückhält.

Im gezeichneten Beispiel haben die zwei Partikelfilter 10 und 20 im Wesentlichen gleiches Volumen und gleiche Filterfläche (Filtrations-Zuströmoberfläche). Vorzugsweise sind die Filterwirkungsgrade der zwei Partikelfilter 10 und 20 derart gewählt, dass sich im Betrieb bei beiden Partikelfiltern eine ähnliche Schichtdicke abgeschiedener Partikel ergibt.

Bei dem ersten Ausführungsbeispiel der Erfindung, Fig. 2, muss man sich ― abgesehen vom Aufbau im Bereich des ersten Partikelfilters 10 - die Abgasanlage 2 so vorstellen, wie im Zusammenhang mit Fig. 1 bezeichnet und beschrieben, einschließlich der beschriebenen Alternativen.

Der in Fig. 2 im Querschnitt gezeichnete, erste Partikelfilter 10 ist ein monolithischer Keramikfilter; er könnte aber auch ein Partikelfilter anderer Bauart sein. Zwischen dem Außenumfang 12 des ersten Partikelfilter 10 und der Gehäusewand 14 (unberücksichtigt die anschließend zu beschreibenden Einprägungen der Gehäusewand 14 nach innen) befindet sich ein Ringraum. Dieser Ringraum ist genutzt zur Schaffung einer Strömungsumgehung, durch die ein Teilstrom des Abgases außerhalb des ersten Partikelfilters 10 vorbei geführt werden kann. Strömungsmäßig hinter dem ersten Partikelfilter 10 vereinigt sich dieser Teilstrom mit dem durch den ersten Partikelfilter 10 hindurch geführten, restlichen Teilstrom des Abgases, und der Gesamtstrom wird einem zweiten Partikelfilter 20 zugeführt, der seriell entsprechend Fig. 1 oder Fig. 3 nachgeschaltet ist. Der zweite Partikelfilter 20 weist keine Strömungsumgehung auf.

Das Gehäuse 4 des ersten Partikelfilter 10 weist über seinen Umfang verteilt eine größere Anzahl von Längssicken 16 auf, die im Vergleich zur sonstigen Gehäusewand 14 nach innen eingeprägt sind. Die in Fig. 2 jeweils erkennbare Linie 18 radial weiter außen als eine betrachtete Längssicke 16 zeigt das Ende der Sicke 16, wo sie wieder in den grob gesprochen elliptischen Umfang der Gehäusewand 14 übergeht. Die Längssicken 16 sind so geformt, dass jeweils zwischen zwei benachbarten Sicken 16 die radial äußere Hälfte eines Röhrchens 22 aus Metall aufgenommen ist. Jedes Röhrchen 22 ist vorn und hinten offen. In dem Raum zwischen den Röhrchen 22 und dem Außenumfang des ersten Partikelfilters 10 befindet sich z.B. eine Lagerungsmatte 24, wie in Fig. 2 für einen Teil der Lagerungsmatte 24 eingezeichnet. Mittels der Lagerungsmatte 24 ist der erste Partikelfilter 10 in dem Gehäuse 4 gehaltert; zugleich werden die Röhrchen 22 nachgiebig nach außen gegen das Gehäuse 4 gedrückt und so gehaltert.

Die Gesamt-Querschnittsfläche der Röhrchen 22 ist so gewählt, dass die durch die Röhrchen 22 gebildete Strömungsumgehung insgesamt einen Strömungswiderstand hat, der im Wesentlichen dem Strömungswiderstand für den Teilstrom durch den ersten Partikelfilter 10 hindurch entspricht.

Es wird betont, dass statt der Röhrchen 22 auch anders ausgebildete Strömungskanäle im Ringraum zwischen dem ersten Partikelfilter 10 und der Wand 14 des Gehäuses 4 vorgesehen sein können und dass es andere Möglichkeiten als die beschriebene zur Positionierung und Halterung dieser Strömungskanäle im Gehäuse 4 gibt.

Es ist möglich, statt der Strömungskanäle im Ringraum zwischen dem ersten Partikelfilter 10 und der Wand 14 des Gehäuses 4 oder zusätzlich zu diesen Strömungskanälen mit einem Keramikfilter zu arbeiten, bei dem ein Teil der Längskanäle für gänzliche Längsdurchströmung offen ist. Dann kann der Keramikfilter, bei gleichem Umfang des Gehäuses 4, einen größeren Umfang als in Fig. 2 gezeichnet haben.

Bei dem Ausführungsbeispiel gemäß Fig. 3 ist die erfindungsgemäße Strömungsumgehung durch eine den ersten Partikelfilter 10 umgehende Bypass-Leitung 30 verwirklicht. Die Bypass-Leitung 30, die in Fig. 3 mit geringerem Durchmesser als real eingezeichnet ist, geht ein Stück vor dem ersten Partikelfilter 10 von dem Rohrabschnitt 6 der Abgasanlage 2 weg und mündet zwischen dem ersten Partikelfilter 10 und dem zweiten Partikelfilter 20 wieder in einen dortigen Rohrabschnitt 32 ein.

## Patentansprüche

1. Abgasanlage für einen Verbrennungsmotor, die mindestens zwei seriell angeordnete Partikelfilter (10; 20) und eine Strömungsumgehung (22; 40) aufweist, durch die ein Teilstrom des Abgases, unter Vermeidung der Filtration in dem mehr stromauf befindlichen, ersten Partikelfilter (10), geführt und hinter dem ersten Partikelfilter (10) wieder mit dem restlichen Teilstrom des Abgases nach dessen Filterung in den ersten Partikelfilter (10) vereinigt wird, wobei der mehr stromab befindliche, zweite Partikelfilter (20) zur Filtration des vereinigten Gesamtstroms des Abgases vorgesehen ist,
**dadurch gekennzeichnet, dass** die Relation der Filterwirkungsgrade der zwei Partikelfilter (10; 20) und/oder die Relation der Filterflächen der zwei Partikelfilter (10; 20) und/oder der Strömungswiderstand der Strömungsumgehung (22; 40) derart gewählt sind, dass sich im Betrieb bei beiden Partikelfiltern (10; 20) eine ähnliche Schichtdicke abgeschiedener Partikel ergibt.

2. Abgasanlage nach Anspruch 1,
**dadurch gekennzeichnet, dass** die Strömungsumgehung (22; 40) mit einem derartigen Strömungswiderstand vorgesehen ist, dass sich der zuströmende Abgasstrom im Wesentlichen gleichmäßig auf einen ersten Teilstrom zur Filtration in dem ersten Partikelfilter (10) und einen zweiten Teilstrom durch die Strömungsumgehung (22; 40) aufteilt.

3. Abgasanlage nach Anspruch 1,
**dadurch gekennzeichnet, dass** die Strömungsumgehung (22; 40) mit einem derartigen Strömungswiderstand vorgesehen ist, dass sich der zuströmende Abgasstrom in einen kleineren, ersten Teilstrom zur Filtration in dem ersten Partikelfilter (10) und einen größeren zweiten Teilstrom durch die Strömungsumgehung (22; 40) aufteilt.

4. Abgasanlage nach einem der Ansprüche 1 bis 3,
**dadurch gekennzeichnet, dass** die Filterfläche des zweiten Partikelfilter (20) größer als die Filterfläche des ersten Partikelfilters (10) ist.

5. Abgasanlage nach einem der Ansprüche 1 bis 4,
**dadurch gekennzeichnet, dass** mindestens einer der Partikelfilter (10; 20) ein monolithischer Keramikfilter, ein Keramikschaum-Filter oder ein Faserfilter ist.

6. Abgasanlage nach einem der Ansprüche 1 bis 5,
**dadurch gekennzeichnet, dass** die Strömungsumgehung (22) mehrere strömungsmäßig parallel geschaltete Strömungskanäle aufweist.

7. Abgasanlage nach einem der Ansprüche 1 bis 6,
**dadurch gekennzeichnet, dass** der erste Partikelfilter (10) ein monolithischer Keramikfilter ist, bei dem zur Schaffung der Strömungsumgehung ein Teil der Längskanäle für gänzliche Längsdurchströmung offen ist.

8. Abgasanlage nach einem der Ansprüche 1 bis 7,
**dadurch gekennzeichnet, dass** die Strömungsumgehung (22) in dem Ringraum zwischen dem ersten Partikelfilter (10) und seinem Gehäuse (4) angeordnet ist.

9. Abgasanlage nach Anspruch 8,
**dadurch gekennzeichnet, dass** in dem Ringraum umfangsmäßig verteilt mehrere Röhrchen (22) angeordnet sind, die sich längs des ersten Partikelfilters (10) erstrecken.

10. Abgasanlage nach Anspruch 9,
**dadurch gekennzeichnet, dass** die Röhrchen (22) mittels Sicken (16) gehaltert sind, die im Gehäuse (4) des ersten Partikelfilters (10) ausgebildet sind.

11. Abgasanlage nach einem der Ansprüche 1 bis 10,
**dadurch gekennzeichnet, dass** zur Schaffung der Strömungsumgehung eine Bypass-Leitung (40) vorgesehen ist, die an dem ersten Partikelfilter (10) vorbei führt.

12. Abgasanlage nach einem der Ansprüche 1 bis 11,
**dadurch gekennzeichnet, dass** beide Partikelfilter (10; 20) katalytisch beschichtet sind zur Senkung der Regenerationstemperatur, bei der abgeschiedene Partikel durch Verbrennung entfernbar sind.

13. Abgasanlage nach einem der Ansprüche 1 bis 11,
**dadurch gekennzeichnet, dass** nur der erste Partikelfilter (10) katalytisch beschichtet ist zur Senkung der Regenerationstemperatur, bei der abgeschiedene Partikel durch Verbrennung entfernbar sind.

## Claims

1. An exhaust gas system for a combustion engine, comprising at least two particle filters (10; 20) arranged in series and a flow bypass (22; 40) through which a partial flow of the exhaust gas is passed avoiding filtration in the more upstream, first particle filter (10) and behind said first particle filter (10) is re-united with the remaining partial flow of the exhaust gas after filtration of the same in the first particle filter (10), with the more-downstream, second particle filter (20) being provided for filtration of the united total flow of the exhaust gas,
**characterized in that** the relation of the filter efficiencies of the two particle filters (10; 20) and/or the relation of the filter areas of the two particle filters (10; 20) and/or the flow resistance of the flow bypass (22; 40) are selected such that, in operation, a similar layer thickness of deposited particles results on both particle filters (22; 40).

2. An exhaust gas system according to claim 1,
**characterized in that** the flow bypass (22; 40) is provided with such flow resistance that the inflowing exhaust gas flow splits in substantially uniform manner to a first partial flow for filtration in the first particle filter (10) and a second partial flow through the flow bypass (22; 40).

3. An exhaust gas system according to claim 1,
**characterized in that** the flow bypass (22; 40) is provided with such flow resistance that the inflowing exhaust gas flow splits into a smaller, first partial flow for filtration in the first particle filter (10) and a larger, second partial flow through the flow bypass (22; 40).

4. An exhaust gas system according to any of claims 1 to 3,
**characterized in that** the filter area of the second particle filter (20) is larger than the filter area of the first particle filter (10).

5. An exhaust gas system according to any of claims 1 to 4,
**characterized in that** at least one of the particle filters (10; 20) is a monolithic ceramic filter, a ceramic foam filter or a fibre filter.

6. An exhaust gas system according to any of claims 1 to 5,
**characterized in that** the flow bypass (22) comprises a plurality of flow channels arranged in parallel in terms of flow.

7. An exhaust gas system according to any of claims 1 to 6,
**characterized in that** the first particle filter (10) is a monolithic ceramic filter in which, for providing the flow bypass, part of the longitudinal channels is open for complete longitudinal passage of the flow therethrough.

8. An exhaust gas system according to any of claims 1 to 7,
**characterized in that** the flow bypass (22) is arranged in the annular space between the first particle filter (10) and the housing (4) of the same.

9. An exhaust gas system according to claim 8,
**characterized in that** several small tubes (22) extending alongside said first particle filter (10) are arranged in said annular space in circumferentially distributed manner.

10. An exhaust gas system according to claim 9,
**characterized in that** said small tubes (22) are supported by means of beads (16) formed in the housing (4) of the first particle filter (10).

11. An exhaust gas system according to any of claims 1 to 10,
**characterized in that**, for creating the flow bypass, there is provided a bypass line (40) bypassing the first particle filter (10).

12. An exhaust gas system according to any of claims 1 to 11,
**characterized in that** both particle filters (10; 20) are coated catalytically for reducing the regeneration temperature at which deposited particles can be removed by combustion.

13. An exhaust gas system according to any of claims 1 to 11,
**characterized in that** only the first particle filter (10) is coated catalytically for reducing the regeneration temperature at which deposited particles can be removed by combustion.

## Revendications

1. Système d'échappement pour un moteur à combustion interne, qui comporte au moins deux filtres à particules (10 ; 20) montés en série et une dérivation (22 ; 30) par laquelle un courant partiel des gaz d'échappement est guidé, en évitant la filtration, dans un premier filtre à particules (10) situé plus en amont, et est réuni à nouveau, derrière le premier filtre à particules (10), avec le courant partiel restant des gaz d'échappement après sa filtration, le deuxième filtre à particules (20) se trouvant plus en aval étant prévu pour la totalité du courant réuni des gaz d'échappement, **caractérisé en ce que** la relation entre les rendements des deux filtres à particules (10 ; 20) et/ou la relation entre les surfaces de filtration des deux filtres à particules (10 ; 20) et/ou la résistance à l'écoulement de la dérivation (22 ; 30) sont choisies de manière que pendant le fonctionnement on obtienne pour les deux filtres à particules (10 ; 20) une épaisseur similaire des couches des particules séparées.

2. Système d'échappement selon la revendication 1, **caractérisé en ce que** la dérivation (22 ; 30) est prévue avec une résistance à l'écoulement telle que le courant arrivant de gaz d'échappement soit réparti sensiblement uniformément entre un premier courant partiel pour la filtration dans le premier filtre à particules (10) et un deuxième courant partiel à travers la dérivation (22 ; 30).

3. Système d'échappement selon la revendication 1, **caractérisé en ce que** la dérivation (22 ; 30) est prévue avec une résistance à l'écoulement telle que le courant arrivant des gaz d'échappement soit divisé en un premier courant partiel plus petit pour la filtration dans le premier filtre à particules (10) et un deuxième courant partiel plus grand à travers la dérivation(22 ; 30).

4. Système d'échappement selon l'une des revendications 1 à 3, **caractérisé en ce que** la surface de filtration du deuxième filtre à particules (20) est plus grande que la surface de filtration du premier filtre à particules (10).

5. Système d'échappement selon l'une des revendications 1 à 4, **caractérisé en ce qu'**au moins l'un des filtres à particules (10 ; 20) est un filtre céramique monolithique, un filtre à mousse de céramique ou un filtre à fibres.

6. Système d'échappement selon l'une des revendications 1 à 5, **caractérisé en ce que** la dérivation (22) comporte plusieurs canaux d'écoulement montés de manière que leurs courants soient parallèles.

7. Système d'échappement selon l'une des revendications 1 à 6, **caractérisé en ce que** le premier filtre à particules (10) est un filtre céramique monolithique dans lequel une partie des canaux longitudinaux est ouverte pour un écoulement longitudinal complet, afin de réaliser la dérivation.

8. Système d'échappement selon l'une des revendications 1 à 7, **caractérisé en ce que** la dérivation (22) est disposée dans l'espace annulaire compris entre le premier filtre à particules (10) et son boîtier (4).

9. Système d'échappement selon la revendication 8, **caractérisé en ce que** dans l'espace annulaire sont répartis périphériquement plusieurs petits tubes (22) qui s'étendent le long du premier filtre à particules (10).

10. Système d'échappement selon la revendication 9, **caractérisé en ce que** les petits tubes (22) sont maintenus au moyen de moulures (16) qui sont réalisées dans le boîtier (4) du premier filtre à particules (10).

11. Système d'échappement selon l'une des revendications 1 à 10, **caractérisé en ce que** pour réaliser la dérivation il est prévu une conduite de dérivation (30) qui passe devant le premier filtre à particules (10).

12. Système d'échappement selon l'une des revendications 1 à 11, **caractérisé en ce que** les deux filtres à particules (10 ; 20) présentent un revêtement catalytique pour abaisser la température de régénération à laquelle les particules séparées peuvent être éliminées par combustion.

13. Système d'échappement selon l'une des revendications 1 à 11, **caractérisé en ce que** seul le premier filtre à particules (10) présente un revêtement catalytique pour abaisser la température de régénération à laquelle les particules séparées peuvent être éliminées par combustion.
